# EUROPEAN PATENT SPECIFICATION

(11) **EP 2 561 224 B1**
(45) Date of publication and mention of the grant of the patent: **12.03.2014**
(21) Application number: 11718321.0
(22) Date of filing: 19.04.2011
(51) Int. Cl.: F03D 11/00, F03D 1/00

(54) **Tower section closure**
Mastabschnittverschluss
Fermeture de caisson

(30) Priority: 20.04.2010 EP 10160456
(43) Date of publication of application: 27.02.2013
(73) Proprietor: Fiberline Composites A/S, 5500 Middelfart (DK)
(72) Inventor: THORNING, Henrik, DK-6000 Kolding (DK)
(74) Representative: Nielsen, Henrik Sten
(86) International application number: PCT/EP2011/056240
(87) International publication number: WO 2011/131673

(56) References cited:
- EP-A1- 0 057 767
- WO-A1-2004/003381
- CN-Y- 201 292 919
- DE-U1-212008 000 019
- GB-A- 175 165
- US-A- 5 411 782
- US-A- 5 947 178
- BELLARMINE G T ET AL: "Wind energy for the 1990s and beyond", ENERGY CONVERSION AND MANAGEMENT, ELSEVIER SCIENCE PUBLISHERS, OXFORD, GB LNKD- DOI:10.1016/0196-8904(96)00009-X, vol. 37, no. 12, 1 December 1996 (1996-12-01), pages 1741-1752, XP004039641, ISSN: 0196-8904

## Description

The present invention relates to a foldable closure for an open end of a tower section of a windmill tower. Moreover, the present invention relates to a method of handling a tower section involving such a closure.

Foldable closures are generally known for example from US 5.947.178 A1.

During the storing and transporting of tower sections, they are commonly subjected to weather conditions that may affect, or even damage, the tower sections. Typically, the inside of a tower section is less protected from the weather than the outside, e.g. the inside may not have been treated for corrosion resistance while the outside has. Thus, it is important to cover the open ends of the tower section. It is known to cover the open ends by tarpaulins. However, these are rather sensitive to strong wind, in particular due to the common lack of a feature on the tower section to which the tarpaulins can be connected and secured. It is also rather hard to attach a tarpaulin-like cover to a tower section, in particular under windy condition, as a tower section typically has a diameter that exceeds the typical length of a the person mounting the tarpaulin by at least a factor two.

It is an object of the present invention to improve the handling, including the storing and transport of tower sections for a windmill tower. A particular feature of the present invention is a foldable closure comprising a plurality of pivotally connected self-supporting plate sections. This has the effect that the closure may be folded together, even though it is a rigid structure when secured to a tower section. One of the advantages of being able to fold the closure together is that it may be transported as ordinary shipment on a road, even though the diameter of the tower section exceeds the maximum allowed width of shipment.

Additional objects, technical effects, and advantages of the present invention will be evident from the specifications below. According to a first aspect of the present invention, the objects are met by a foldable closure, for closing off a circular end opening of a tower section of a windmill tower or a similar tower, the tower section comprising a cylindrical or frusto-conical wall and an annular flange positioned at the circular end opening, the annular flange defining an inner diameter and the circular end opening defining an outer diameter, the closure in an unfolded state defining a substantially circular configuration defining a minimum transversal dimension larger than the inner diameter and substantially corresponding to the outer diameter, the closure being composed of a plurality of self-supporting plate sections being pivotally connected for allowing the closure to be converted from an unfolded state defining the circular configuration into a folded state, and the closure comprising a number of fasteners for connecting the closure to the annular flange. This allows for a strong and durable closure that can withstand harsh weather conditions, and be connected to or removed from the tower section under such conditions. The number of fasteners, which may be one or more, allows for the closure to be connected directly to the tower section, without first mounting any element on the tower section for connecting the closure to The self-supporting plate sections allow for an easier connection to the tower section than if they were a tarpaulin.

Transversal dimension of an object is here understood to be the length of a straight line going from one side of the object to the other side of the object through its geometric centre. Minimum transversal dimension of an object is here understood to be the smallest transversal dimension defined by the object For example, if the object is a disc, the minimum transversal dimension is the length of the diameter of the circle defined by the boundary of the disc, if the object is a square, the minimum transversal dimension is the length of a straight line normal to and going between two parallel lines defined by two sides on opposite sides of the square, and if the object is a rectangle, the minimum transversal dimension is the length of a straight line normal to and going between two parallel lines defined by the longer sides of the rectangle.

The plurality of self-supporting plate sections being pivotally connected is here understood to encompass the plurality of self-supporting plate sections being joined by one or more connecting members or pivot, where each connecting member or pivot is composed of a unitary flexible body, for example flexible strips of rubber, or alternatively where each connecting member or pivot is composed of a plurality of cooperating elements, for example a continuous hinge or a beam interconnecting two neighbouring self-supporting plate sections by two rubber strips positioned on opposite sides of the beam.

A self-supporting plate section of the plurality of self-supporting plate sections may have a dimension in the direction of maximum extension larger than the inner diameter, This has the effect that it allows for a more rigid construction of the closure which has the advantage that a person may walk upon the closure when it is connected to the annular flange and covering the circular opening, e.g. for connecting lift wires to lift elements attached to the annular flange.

The minimum transversal dimension may be in one or more of the ranges of approximately 2,5 metres to approximately 10 metres, approximately 3.0 metres to approximately 7.0 metres, approximately 4.5 metres to approximately 6.0 metres, approximately 5 metres, approximately 2.5 metres to approximately 3.5 metres, approximately 3.5 metres to approximately 4.5 metres, approximately 4.5 metres to approximately 5.5 metres, approximately 5.5 metres to approximately 6.5 metres, approximately 7.5 metres to approximately 8.5 metres, and approximately 8.5 metres to approximately 10 metres.

The closure in the folded state may define a maximum dimension in the direction of minimum extension smaller than 2.4 metres. This has the effect that it can be readily loaded onto a common load bed of a common trailer, which has the advantage that the closure may be transported as a common shipment on a common road. The plurality of seff-supporting plate sections may comprise three or more plate sections pivotally connected along parallel pivot axes. This allows for the closure in its folded state to occupy less space than if folded along non-parallel pivot axes. One of the advantage with this feature is that a larger closure can be handled by the same machines, e.g. transport vehicles.

Each of the plurality of self-supporting plate sections may define a first planar surface portion and comprise a plurality of elongated support elements connected to and protruding from its first planar surface portion, the plurality of support elements may be oriented parallel to each other and to the first planar surface portion. This allows for the closure to plate sections to be thinner without any reduction in the structural strength or change of material, which has the advantage that the weight of the closure can be reduced. Each support element of the plurality of support elements may have a T-profile. Further, a support element of the plurality of support elements and a self-supporting plate sections of the plurality of self-supporting plate sections may be integrally formed and manufactured of a fibre-reinforced plastic. These features will work to minimize the weight of the closure with maintained structural strength of the plate sections.

The number of fasteners may be adapted for cooperating with the plurality of support elements. This has the advantage of a simple technical realisation in connecting the closure to the annular flange, Further, it allows for a more flexible connecting in that the fastener may engage the support element along its complete length.

A self-supporting plate section of the plurality of self-supporting plate sections may define a cut-out for a lift element connected to the annular flange, the closure further comprising a compliant cover for covering the cut-out and the lift elements. This has the effect that lift elements may be mounted on the annular flange, and that a lift element that is mounted on the annular flange may be engaged in a lifting, even though the closure is connected to the annular flange and closing off the circular an opening of the tower section. Exemples of materials the compliant cover may be manufactured of is a waterproof fabric or a flexible sheet of plastic. The compliant cover may be releasably attached to the self-supporting plate sections defining the cut-out. This allows for the compliant cover to be completely removed prior to engaging the lift elements, which has the advantage that they may be used without breaking them for accessing the lift elements.

According to a second aspect of the present invention, the objects are met by a foldable closure for closing off a circular end opening of a tower section of a windmill tower or a similar tower, the tower section comprising a cylindrical or frusto-conical wall and an annular flange positioned at the circular end opening, the annular flange defining an inner diameter and the circular end opening defining an outer diameter the closure being composed of a plurality of self-supporting plate sections being pivotally connected for allowing the closure to be converted from an unfolded state into a folded state, and the closure comprising a number of fasteners for connecting the closure to the annular flange. The closure may define a substantially circular configuration in the unfolded state. The substantially circular configuration may define a minimum transversal dimension larger than the inner diameter. The substantially circular configuration may define a minimum transversal dimension substantially corresponding to the outer diameter. The closure according to the second aspect of the present invention may comprise any feature or combination of features of the first aspect of the present invention.

According to a third aspect of the present invention, the objects are met by a method of handling a tower section of a windmill tower or a similar tower, the tower section having a circular end opening and comprising a cylindrical or frusto-conical wall and an annular flange positioned at the circular end opening, the annular flange defining an inner diamater and the circular end opening defining an outer diameter, the method comprising the steps of: providing the tower section at a first location, providing a closure according to the first or second aspect of the present invention in its folded state at the first location, unfolding the closure from its folded state into its unfolded state, and connecting the closure to the annular flange at the first location by the number of fasteners.

The method according to the second aspect of the present invention may further comprise the steps of transporting the tower with the closure connected to the annular flange from the first location to a second location, disconnecting the closure from the annular flange at the second location, and folding the closure from its unfolded state to its folded state. For example, the transporting may be over land, e.g. by a spatial tower section trailer transport, or over sea, e.g. by a ship.

The method according to the third aspect of the present invention may further comprise the steps of: providing a transport vehicle at the second location for transporting the closure, loading the closure in its folded state onto the transport vehicle, and transporting the closure from the second location to the first location or to a third location. For example, the transport vehicle may include a truck fitted with a trailer for road transport, a barge, or a ship.

### BRIEF DESCRIPTION OP THE DRAWINGS

The above-mentioned objects and features and additional objects and features according to the present invention, will be further elaborated upon in the following detailed description and appended claims in conjunction with the figures:
FIG.1A illustrates an exploded perspective top view of the preferred embodiment of the closure according to the present invention in its unfolded state and in a positioning relative to an upright tower section prior to connecting thereto,
FIG.1B illustrates a perspective top view of the closure illustrated in FIG.1A connected to the upright tower section.
FIG.2 illustrates a perspective top view of the preferred embodiment of the closure according to the present invention connected to a tower section lying down,
FIG.3A illustrates a perspective and partly cut-out top view of the preferred embodiment of the closure according to the present invention connected to an upright tower section,
FIG.3B illustrates a magnified perspective view ef the cut-out view in FIG.3A,
FIG.4A illustrates a perspective top view of the preferred embodiment of the closure according to the present invention being folded together from its unfolded state, and
FIG.4B illustrates a perspective top view of the preferred embodiment of the closure according to the present invention in its folded state and placed on a transport vehicle.

### DETAILED DESCRIPTION

The same number indexing is used for identical or similar elements or features in all of the figures.

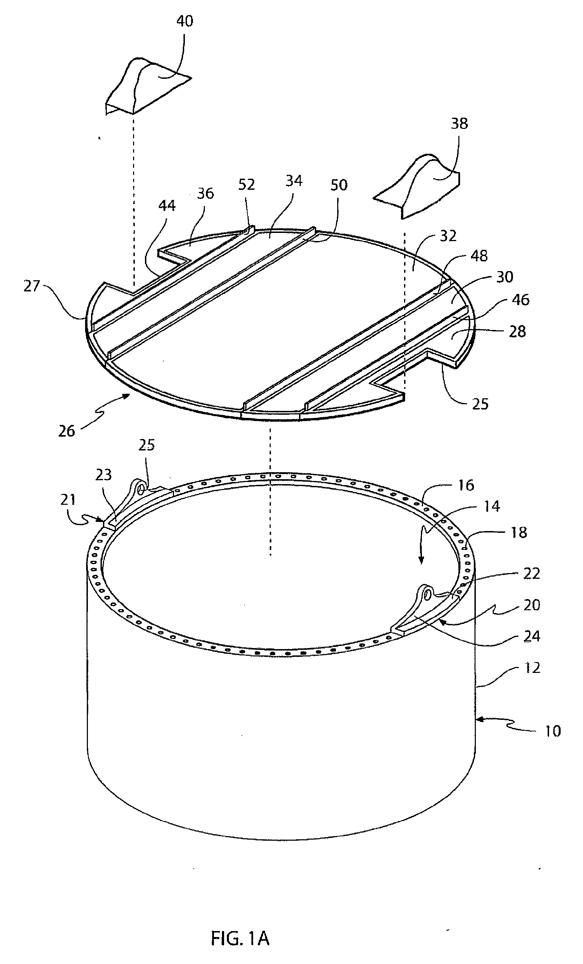

FIG.1A illustrates a tower section 10 comprising a frusto-conical wall 12 and having a circular end opening 14, An annular flange 16 is connected to the frusto-conical wall 12 at the circular end opening 14. The annular flange 16 has a plurality of regularly spaced bolt holes 18 for interconnecting with a similar flange with bolt holes on another tower section. Lift elements 20, 21 are attached to the annular flange 16 at opposite sides of the circular end opening 14. The lift elements have a base 22, 23 bolted to the flange via a number of the bolt holes 18, and a portion 24, 25 protruding from the base 22, 23 in a direction away from the annular flange 16 and the tower section 10. The protruding portions 24, 25 each have an eyelet, by which the whole tower section can be lifted and balanced so that the symmetry axis of the frustoconical wall 12 is vertical.

FIG.1A further illustrates an exploded perspective top view of the preferred embodiment of the closure 26 according to the present invention. The closure 26 comprises five self-supporting plate sections 28-36 pivotally. Adjacent plate sections 28-36 are pivotally connected with each other by elongated flexible pivot joint 46-52. The flexible pivot joints 46-52 are parallel and extend across the closure 26. The five self-supporting plate sections 28-36 are flat and have parallel planar side faces, one inner face for facing the end opening 14 of a tower section 10 for a windmill tower, and one outer face for facing away from the tower section 10. The two peripheral plate sections 28, 36 have cut-outs 42, 44 at the edge 27 of the closure 26. Each of the cut-outs 42, 44 is covered by a compliant cover 38, 40 of a flexible fabric. The compliant covers 38, 40 are attached to the peripheral plate sections 28, 36 and can be made to protrude from the outer face of the peripheral plate sections 28, 36, or be folded or inverted to be in the plane of the outer face of the peripheral plate sections 28, 36, or protrude from the inner face of the peripheral plate sections 28, 36 towards the tower section 10. When the closure is positioned over the end opening 14 as illustrated in FIG.1A and lowered onto the opening, the protruding portions 24, 25 of the lift elements 21, 22 extend through the cut-outs 42, 44 and are housed within the compliant covers 38, 40.

The annular flange 16 defines an inner diameter and the closure 10 defines a minimum transversal dimension larger than the inner diameter in the unfolded state shown in FIG.1A. Further, the central self-supporting plate section 32 has a dimension in the direction of maximum extension that is larger than the inner diameter.

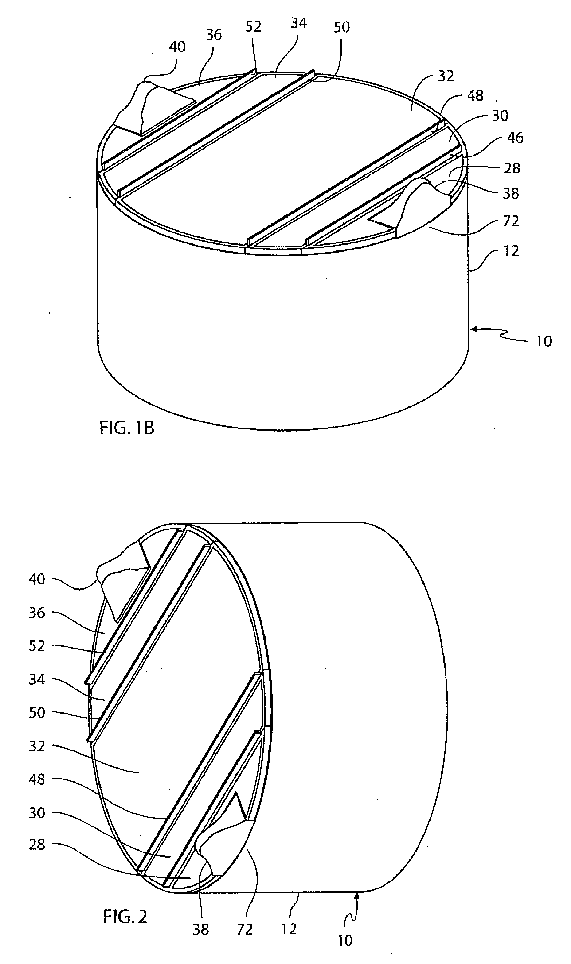

In FIG.1B the closure 26 has been attached to the tower section 10. The protruding portions 24, 25 shown in FIG.1A are now located within and covered by the compliant covers 38, 40. The compliant covers 38, 40 have an extension 72 provided with magnets that attach to and seal the compliant covers 38, 40 to the base 22, 23 of the lift elements 20, 21. Further, the compliant covers 38, 40 are releasably attached to the peripheral plate sections 28, 36 by magnets.

In FIG.1B the tower section 10 is positioned upright. The closure 26 is resting on the annular flange 16 shown in FIG. 1A without being attached thereto and without being deformed. In FIG.2 the tower section 20 is positioned on its side lying down. The closure 26 is attached to the annular flange 16 shown in FIG.1A and thereby supported so that it does not fold together.

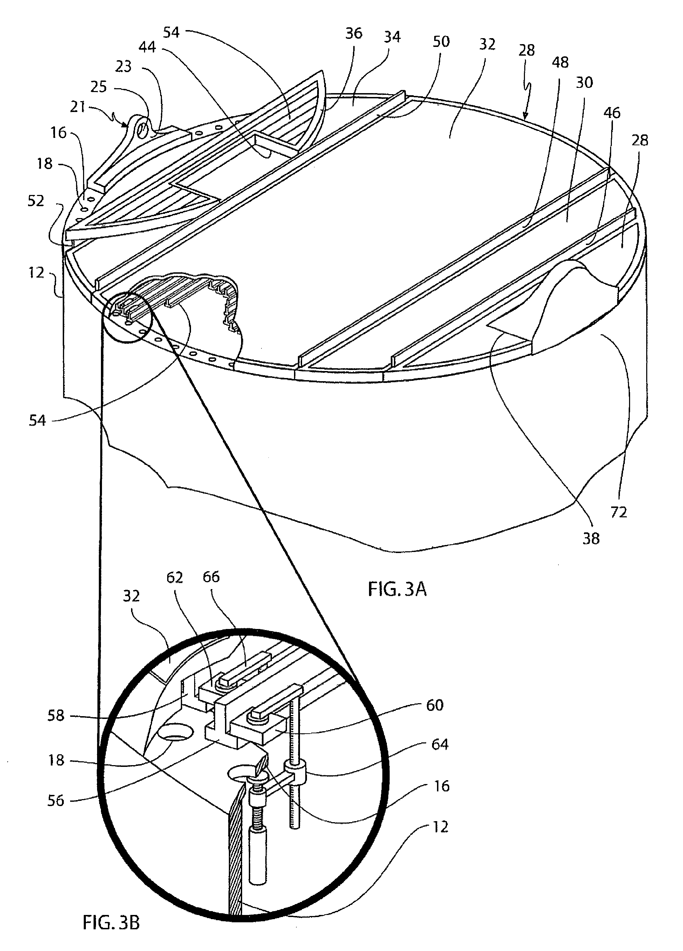

In FIG.3A a the same perspective top-view as in FIG.1B is illustrated, but with the closure 26 attached and secured to the annular flange 16. The securing made on the inner sides of the self-supporting plate sections 28-36 is shown in the cut-out view, of which a portion is enlarged in FIG.3B. One of the peripheral plate sections 36 is folded towards its neighbouring plate section 34 by the interconnecting elongated flexible pivot joint 52. A plurality of elongated and equidistant support elements 54 is connected to the planar inner sides or surfaces of the self-supporting plate sections 28-36 and running parallel with each other and with the four elongated flexible pivot joint 46-52. Some of the elongated support elements 54 are visible on the back-folded peripheral plate section 36, others are visible in the cut out view. All of the support elements 54 have a T-profile, which is shown in the magnified view of FIG. 3B, where two neighbouring elongated support elements 56, 58 are shown. Both of the support elements 56, 58 rest on the annular flange 16. Blocks 60, 62 rests on the inside of the neighbouring T-profile and above the annular flange 16. Clamps 64, 66 attach the elongated support elements 56, 58, and thereby the self-supporting plate section 32, to the annular flange 16. The other plate sections 28, 30, 34, 36 are similarly attached to the annular flange.

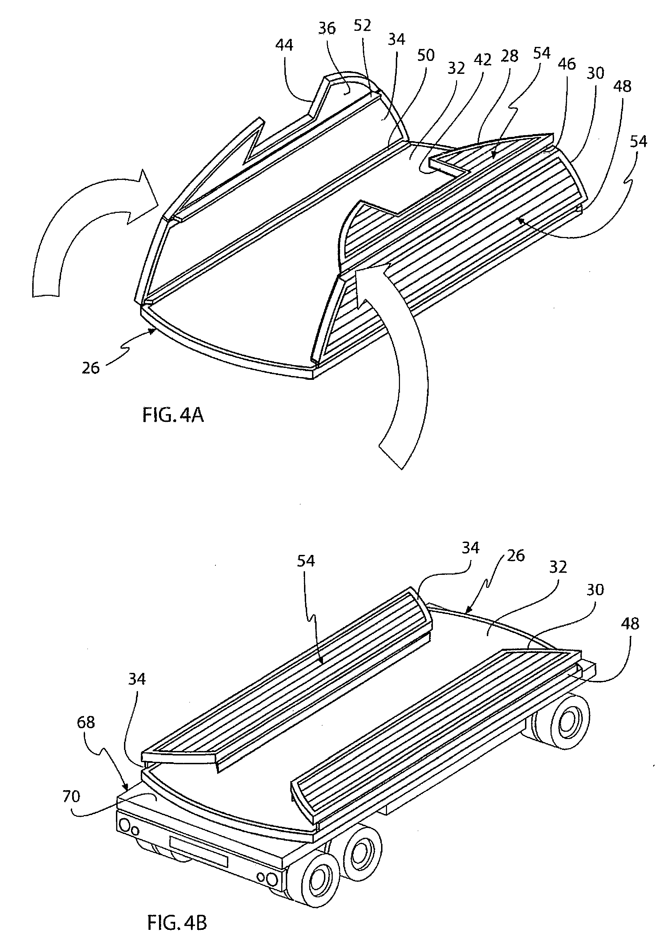

In FIG.4A a perspective top view of the closure 10 is illustrated when the closure 10 is folded together from its unfolded state. The releasably attached compliant covers 38, 40 depicted in FIG.1B-3B have been removed, but may be used repeatedly. The peripheral plate sections 28, 36 are folded towards the neighbouring plate sections 30, 34 to define a first pair of folded plate sections 28, 30 and a second pair of folded plate sections 34, 36. The folded pair plate sections 28, 30, 34, 36, are subsequently folded toward the centrally placed plate section 32. The folding of the closure 26 as depicted in FIG.4A is performed in a horizontal position. However, it is also possible to perform the same folding for an upright closure, e.g. with the elongated flexible pivot joints 46, 48 oriented vertically.

FIG.4B illustrates a perspective top view of the closure 10 in the previous figure in its fully folded state and placed on a transport vehicle 68. The inner side of the centrally placed plate section 32 is placed in facial contact with the load bed 70 of the transport vehicle 68.

### ITEM LIST

- 10: tower section
- 12: cylindrical wall
- 14: circular end opening
- 16: annular flange
- 18.: bolt-holes
- 20: lift element
- 21: lift element
- 22: base
- 23: base
- 24: protruding portion
- 25: protruding portion
- 26: closure
- 27: edge of closure
- 28: self-supporting plate section
- 30: self-supporting plate section
- 32: self-supporting plate section
- 34: self-supporting plate section
- 36: self-supporting plate section
- 38: compliant cover
- 40: compliant cover
- 42: cut-out
- 44: cut-out
- 46: elongated flexible pivot joint
- 48: elongated flexible pivot joint
- 50: elongated flexible pivot joint
- 52: elongated flexible pivot joint
- 54: plurality of elongated T-profiled support elements
- 56: elongated T-profiled support elements
- 58: elongated T-profiled support elements
- 60: block
- 62: block
- 64: clamp
- 66: clamp
- 68: transport vehicle
- 70: load bed
- 72: extension

## Claims

1. A foldable closure (10) for closing off a circular end opening (14) of a tower section of a windmill tower or a similar tower, said tower section comprising a cylindrical or frustoconical wall (12) and an annular flange (16) positioned at said circular end opening (14), said annular flange (16) defining an inner diameter and said circular end opening (14) defining an outer diameter, said closure (10) defining in an unfolded state a substantially circular configuration defining a minimum transversal dimension larger than said inner diameter and substantially corresponding to said outer diameter, said closure (10) being composed of a plurality of plate sections (28, 30, 32, 34, 36) being pivotally connected for allowing said closure (10) to be converted from said unfolded state defining said circular configuration into a folded state, **characterised in that** said plate sections (28, 30, 32, 34, 36) are self-supporting and that said closure comprises a number of fasteners (60, 62, 64, 66) for connecting said closure (10) to said annular flange (16). 1

2. The closure (10) according to claim 1 **characterised by** a self-supporting plate section of said plurality of self-supporting plate sections (28, 30, 32, 34, 36) having a dimension in the direction of maximum extension larger than said inner diameter.

3. The closure (10) according to any of the claims 1-2, **characterised by** said minimum transversal dimension being in one or more of the ranges of approximately 2.5 metres to approximately 10 metres, approximately 3.0 metres to approximately 7.0 metres, approximately 4.5 metres to approximately 6.0 metres, approximately 5 metres, approximately 2.5 metres to approximately 3.5 metres, approximately 3.5 metres to approximately 4.5 metres, approximately 4.5 metres to approximately 5.5 metres, approximately 5.5 metres to approximately 6.5 metres, approximately 7.5 metres to approximately 8.5 metres, and approximately 8.5 metres to approximately 10 metres.

4. The closure (10) according to any of the claims 1-3, **characterised by** said closure (10) in said folded state defining a maximum dimension in the direction of minimum extension smaller than 2.4 metres.

5. The closure (10) according to any of the claims 1-4, **characterised by** said plurality of self-supporting plate sections (28, 30, 32, 34, 36) comprising three or more plate sections pivotally connected along parallel pivot axes.

6. The closure (10) according to any of the claims 1-5, **characterised by** each of said plurality of self-supporting plate sections (28, 30, 32, 34, 36) defining a first planar surface portion and comprising a plurality of elongated support elements (56, 58) connected to and protruding from its first planar surface portion, said plurality of support elements (56, 58) being oriented parallel to each other and to said first planar surface portion.

7. The closure (10) according to claim 6, **characterised by** each support element of said plurality of support elements (56, 58) having a T-profile.

8. The closure (10) according to any of the claims 6-7, **characterised by** a support element of said plurality of support elements (56, 58) and a self-supporting plate section of said plurality of self-supporting plate sections (28, 30, 32, 34, 36) being integrally formed and manufactured of a fibre-reinforced plastic.

9. The closure (10) according to any of the claims 1-8, **characterised by** a self-supporting plate section of said plurality of self-supporting plate sections (28, 30, 32, 34, 36) defines a cut-out for a lift element (20, 21) connected to said annular flange (16), said closure (10) further comprising a compliant cover (38, 40) for covering said cut-out and said lift element (20, 21).

10. The closure (10) according to claim 9, **characterised by** said compliant cover (38, 40) being releasably attached to said self-supporting plate sections (28, 30, 32, 34, 36) defining said cut-out.

11. A method of handling a tower section of a windmill tower or a similar tower, said tower section having a circular end opening (14) and comprising a cylindrical or frusto-conical wall (12) and an annular flange (16) positioned at said circular end opening (14), said annular flange (16) defining an inner diameter and said circular end opening (14) defining an outer diameter, **characterised by** said method comprising the steps of:
providing said tower section at a first location,
providing a foldable closure (10) according to any of the claims 1 to 10 in its folded state at said first location,
unfolding said closure (10) from its folded state into its unfolded state, and
connecting said closure (10) to said annular flange (16) at said first location by said number of fasteners (60, 62, 64, 66).

12. The method according to claim 11, **characterised by** further comprising the steps of:
transporting said tower with said closure (10) connected to said annular flange (16) from said first location to a second location,
disconnecting said closure (10) from said annular flange (16) at said second location, and
folding said closure (10) from its unfolded state to its folded state.

13. The method according to claim 12, **characterised by** further comprising the steps of:
providing a transport vehicle (68) at said second location for transporting said closure (10),
loading said closure (10) in its folded state onto said transport vehicle (68), and
transporting said closure (10) from said second location to said first location or to a third location.

## Patentansprüche

1. Faltbarer Verschluss (10) zum Verschließen einer kreisförmigen Endöffnung (14) eines Mastabschnittes eines Windmühlenmastes oder eines ähnlichen Mastes, wobei der Mastabschnitt eine zylindrische oder kegelstumpfförmige Wand (12) und einen ringförmigen Flansch (16) umfasst, der an der kreisförmigen Endöffnung (14) positioniert ist, wobei der ringförmige Flansch (16) einen Innendurchmesser definiert, und die kreisförmige Endöffnung (14) einen Außendurchmesser definiert, wobei der Verschluss (10) in einem entfalteten Zustand eine im Wesentlichen kreisförmige Konfiguration definiert, die ein Mindestquermaß definiert, das größer als den Innendurchmesser ist und im Wesentlichen dem Außendurchmesser entspricht, **dadurch gekennzeichnet, dass** der Verschluss (10) aus einer Vielzahl von Plattenabschnitten (28, 30, 32, 34, 36) besteht, die schwenkbar verbunden sind, um dem Verschluss (10) zu erlauben, von dem entfalteten Zustand, der die kreisförmige Konfiguration definiert, in einen gefalteten Zustand umgewandelt zu werden, **dadurch gekennzeichnet, dass** die Plattenabschnitte (28, 30, 32, 34, 36) selbsttragend sind, und dass der Verschluss eine Anzahl Verbindungselemente (60, 62, 64, 66) zum Verbinden des Verschlusses (10) mit dem ringförmigen Flansch (16) umfasst.

2. Verschluss (10) nach Anspruch 1, **dadurch gekennzeichnet, dass** ein selbsttragender Plattenabschnitt der Vielzahl von selbsttragenden Plattenabschnitten (28, 30, 32, 34, 36) ein Maß in der Richtung einer Höchsterstreckung aufweist, die größer als der Innendurchmesser ist.

3. Verschluss (10) nach einem der Ansprüche 1-2, **dadurch gekennzeichnet, dass** das Mindestquermaß in einem oder mehreren der Bereiche von ungefähr 2.5 Meter bis ungefähr 10 Meter, ungefähr 3.0 Meter bis ungefähr 7.0 Meter, ungefähr 4.5 Meter bis ungefähr 6.0 Meter, ungefähr 5 Meter, ungefähr 2.5 Meter bis ungefähr 3.5 Meter, ungefähr 3.5 Meter bis ungefähr 4.5 Meter, ungefähr 4.5 Meter bis ungefähr 5.5 Meter, ungefähr 5.5 Meter bis ungefähr 6.5 Meter, ungefähr 7.5 Meter bis ungefähr 8.5 Meter, und ungefähr 8.5 Meter bis ungefähr 10 Meter liegt.

4. Verschluss (10) nach einem der Ansprüche 1-3, **dadurch gekennzeichnet, dass** der Verschluss (10) im gefalteten Zustand ein Höchstmaß in der Richtung einer Mindesterstreckung definiert, der kleiner als 2.4 Meter ist.

5. Verschluss (10) nach einem der Ansprüche 1-4, **dadurch gekennzeichnet, dass** die Vielzahl von selbsttragenden Plattenabschnitten (28, 30, 32, 34, 36) drei oder mehrere Plattenabschnitte umfasst, die entlang parallelen Schwenkachsen verbunden sind.

6. Verschluss (10) nach einem der Ansprüche 1-5, **dadurch gekennzeichnet, dass** jeder der Vielzahl von selbsttragenden Plattenabschnitten (28, 30, 32, 34, 36) einen ersten ebenen Flächenabschnitt definiert und eine Vielzahl von länglichen Stützelementen (56, 58) umfasst, die mit dem ersten ebenen Flächenabschnitt verbunden sind und daraus vorstehen, wobei die Vielzahl von Stützelementen (56, 58) parallel zueinander und zum ersten ebenen Flächenabschnitt ausgerichtet sind.

7. Verschluss (10) nach Anspruch 6, **dadurch gekennzeichnet, dass** jedes Stützelement der Vielzahl von Stützelementen (56, 58) ein T-Profil aufweist.

8. Verschluss (10) nach einem der Ansprüche 6-7, **dadurch gekennzeichnet, dass** ein Stützelement der Vielzahl von Stützelementen (56, 58) und ein selbsttragender Plattenabschnitt der Vielzahl von selbsttragenden Plattenabschnitten (28, 30, 32, 34, 36) integral ausgebildet sind und aus einem faserverstärken Kunststoff hergestellt sind.

9. Verschluss (10) nach einem der Ansprüche 1-8, **dadurch gekennzeichnet, dass** ein selbsttragender Plattenabschnitt der Vielzahl von selbsttragenden Plattenabschnitten (28, 30, 32, 34, 36) einen Ausschnitt für ein Hebeelement (20, 21) definiert, der mit dem ringförmigen Flansch (16) verbunden ist, wobei der Verschluss (10) ferner eine nachgiebige Abdeckung (38, 40) zum Abdecken des Ausschnittes und des Hebeelementes (20, 21) umfasst.

10. Verschluss (10) nach Anspruch 9, **dadurch gekennzeichnet, dass** die nachgiebige Abdeckung (38, 40) an den selbsttragenden Plattenabschnitten (28, 30, 32, 34, 36), die den Ausschnitt definieren, lösbar befestigt sind.

11. Verfahren zum Handhaben eines Mastabschnittes eines Windmühlenmastes oder eines ähnlichen Mastes, wobei der Mastabschnitt eine kreisförmige Endöffnung (14) aufweist und eine zylindrische oder kegelstumpfförmige Wand (12) und einen ringförmigen Flansch (16) umfasst, der an der kreisförmigen Endöffnung (14) positioniert ist, wobei der ringförmige Flansch (16) einen Innendurchmesser definiert, und die kreisförmige Endöffnung (14) einen Außendurchmesser definiert, **dadurch gekennzeichnet, dass** das Verfahren die folgenden Schritte umfasst:
Bereitstellen des Mastabschnittes an einer ersten Stelle,
Bereitstellen eines faltbaren Verschlusses (10) nach einem der Ansprüche 1 bis 10 in seinem gefalteten Zustand an der ersten Stelle,
Entfalten des Verschlusses (10) aus seinem gefalteten Zustand in seinen entfalteten Zustand, und
Verbinden des Verschlusses (10) mit dem ringförmige Flansch (16) an der ersten Stelle durch die Anzahl Verbindungsmittel (60, 62, 64, 66).

12. Verfahren nach Anspruch 11, **dadurch gekennzeichnet, dass** es ferner die folgenden Schritte umfasst:
Transportieren des Mastes mit dem Verschluss (10), der mit dem ringförmigen Flansch (16) verbunden ist, von der ersten Stelle zu einer zweiten Stelle,
Trennen des Verschlusses (10) vom ringförmigen Flansch (16) an der zweiten Stelle, und
Falten des Verschlusses (10) aus seinem entfalteten Zustand in seinen gefalteten Zustand.

13. Verfahren nach Anspruch 12, **dadurch gekennzeichnet, dass** es ferner die folgenden Schritte umfasst:
Bereitstellen eines Transportfahrzeuges (68) an der zweiten Stelle zum Transportieren des Verschlusses (10),
Laden des Verschlusses (10) in seinem gefalteten Zustand auf das Transportfahrzeug (68), und
Transportieren des Verschlusses (10) von der zweiten Stelle zur ersten Stelle oder zu einer dritten Stelle.

## Revendications

1. Fermeture pliable (10) pour fermer une ouverture d'extrémité circulaire (14) d'un caisson d'une tour d'éolienne, ledit caisson comprenant une paroi cylindrique ou tronconique (12) et une bride annulaire (16) positionnée à ladite ouverture d'extrémité circulaire (14), ladite bride annulaire (16) définissant un diamètre intérieur et ladite ouverture d'extrémité circulaire (14) définissant un diamètre extérieur, ladite fermeture (10) définissant, dans un état déplié, une configuration substantiellement circulaire qui définit une dimension transversale minimale qui est supérieure audit diamètre intérieur et qui correspond substantiellement audit diamètre extérieur, ladite fermeture (10) étant composée d'une pluralité de sections de plaques (28, 30, 32, 34, 36) qui sont liées de manière pivotable pour permettre à ladite fermeture (10) d'être convertie dudit état déplié définissant ladite configuration circulaire, à un état plié, **caractérisée en ce que** lesdites sections de plaques (28, 30, 32, 34, 36) sont auto-suffisantes et que ladite fermeture comprend un nombre d'attaches (60, 62, 64, 66) pour lier ladite fermeture (10) à ladite bride annulaire (16).

2. Fermeture (10) selon la revendication 1, **caractérisée en** une section de plaque auto-suffisant de ladite pluralité de sections de plaques auto-suffisantes (28, 30, 32, 34. 36) ayant une dimension dans la direction d'extension maximale qui est supérieure audit diamètre intérieur.

3. Fermeture (10) selon l'une quelconque des revendications 1 à 2, **caractérisée en ce que** ladite dimension transversale minimale se situant dans au moins une des plages d'environ 2,5 mètres à environ 10 mètres, d'environ 3,0 mètres à environ 7,0 mètres, d'environ 4,5 mètres à environ 6,0 mètres, d'environ 5 mètres, d'environ 2,5 mètres à environ 3,5 mètres, d'environ 3,5 mètres à environ 4,5 mètres, d'environ 4,5 mètres à environ 5,5 mètres, d'environ 5,5 mètres à environ 6.5 mètres, d'environ 7,5 mètres à environ 8,5 mètres, et d'environ 8,5 mètres à environ 10 mètres.

4. Fermeture (10) selon l'une quelconque des revendications 1 à 3, **caractérisée en ce que** ladite fermeture (10) dans ledit état plié définit une dimension maximale dans la direction d'extension minimale étant inférieure à 2,4 mètres.

5. Fermeture (10) selon l'une quelconque des revendications 1 à 3, **caractérisée en ce que** ladite pluralité de sections de plaques auto-suffisantes (28, 30, 32, 34, 36) comprend au moins trois sections de plaques qui sont liées de manière pivotable le long d'axes pivotants parallèles.

6. Fermeture (10) selon l'une quelconque des revendications 1 à 5, **caractérisée en ce que** ladite pluralité de sections de plaques auto-suffisantes (28, 30, 32, 34, 36) définit une première portion de surface plane et comprenant une pluralité d'éléments de support allongés (56, 58) liée à sa première portion de surface plane et faisant saillie de celle-ci, ladite pluralité d'éléments de support (56, 58) étant orientée en parallèle les uns par rapport aux autres et à la première portion de surface plane.

7. Fermeture (10) selon la revendication 6, **caractérisée en ce que** chaque élément de support de ladite pluralité d'éléments de support (56, 58) a un profil en forme de T.

8. Fermeture (10) selon l'une quelconque des revendications 6 à 7, **caractérisée en ce qu'**un élément de support de ladite pluralité d'éléments de support (56, 58) et une section de plaque auto-suffisante de ladite pluralité de sections de plaques auto-suffisantes (28, 30, 32, 34, 36) sont intégralement formés et produits à partir d'un plastique renforcé par des fibres.

9. Fermeture (10) selon l'une quelconque des revendications 1 à 8, **caractérisée en ce qu'**une section de plaque auto-suffisante de ladite pluralité de sections de plaques auto-suffisantes (28, 30, 32, 34, 36) définit une échancrure pour un élément élévateur (20, 21) lié à ladite bride annulaire (16), ladite fermeture (10) comprenant en outre une couverture souple (38, 40) pour couvrir ladite échancrure et ledit élément élévateur (20, 21).

10. Fermeture (10) selon la revendication 9, **caractérisée en ce que** la couverture souple (38, 40) est fixée de manière détachable auxdites sections de plaques auto-suffisantes (28, 30, 32, 34, 36) définissant ladite échancrure.

11. Procédé pour la manipulation d'un caisson d'une tour d'éolienne ou tour similaire, ledit caisson ayant une ouverture d'extrémité circulaire (14) et comprenant une paroi cylindrique ou tronconique (12) et une bride annulaire (16) positionnées à ladite ouverture d'extrémité circulaire (14), ladite bride annulaire (16) définissant un diamètre intérieur et ladite ouverture d'extrémité circulaire (14) définissant un diamètre extérieur, **caractérisé en ce que** le procédé comprend les étapes de:
fournir ledit caisson dans un premier emplacement,
fournir une fermeture pliable (10) selon l'une quelconque des revendications 1 à 10 dans son état plié audit premier emplacement,
déplier ladite fermeture (10) de son état plié à son état déplié, et
lier ladite fermeture (10) à ladite bride annulaire (16) et ledit premier emplacement par ledit nombre d'attaches (60, 62, 64, 66).

12. Procédé selon la revendication 11, **caractérisé en ce qu'**il comprend en outre les étapes de:
transporter ladite tour avec ladite fermeture (10) liée à ladite bride annulaire (16) dudit premier emplacement à un deuxième emplacement,
déconnecter ladite fermeture (10) de ladite bride annulaire (16) audit deuxième emplacement, et
plier ladite fermeture (10) de son état déplié à son état plié.

13. Procédé selon la revendication 12, **caractérisé en ce qu'**il comprend les étapes de:
fournir un véhicule de transport (68) audit deuxième emplacement pour transporter ladite fermeture (10),
charger ladite fermeture (10) dans son état plié sur ledit véhicule de transport (68), et transporter ladite fermeture (10) dudit deuxième emplacement audit premier emplacement ou à un troisième emplacement.
